Europäisches Patentamt

European Patent Office

Office européen des brevets

(19)

(11) Publication number: **0 059 439**
**B1**

(12) # EUROPEAN PATENT SPECIFICATION

(45) Date of publication of patent specification: **22.05.85**

(51) Int. Cl.⁴: **G 03 B 15/04**

(21) Application number: **82101454.5**

(22) Date of filing: **25.02.82**

(54) **Process for sealing a housing for a multi-lamp photoflash unit.**

(30) Priority: **27.02.81 US 238865**

(43) Date of publication of application:
**08.09.82 Bulletin 82/36**

(45) Publication of the grant of the patent:
**22.05.85 Bulletin 85/21**

(84) Designated Contracting States:
**BE DE FR GB IT NL**

(56) References cited:
**DE-A-2 242 436**
**US-A-4 245 280**

(73) Proprietor: **GTE Products Corporation**
**100 West 10th Street**
**Wilmington, DE 19801 (US)**

(72) Inventor: **Broadt, David R.**
**R.D. No. 1 Box 276**
**Lewisburg, Pa. 17837 (US)**
Inventor: **Kackenmeister, Carl F.**
**1298 Market Street**
**Williamsport, Pa. 17701 (US)**

(74) Representative: **Lemke, Jörg-Michael, Dipl.-Ing.**
**et al**
**Wolframstrasse 9**
**D-8900 Augsburg (DE)**

Courier Press, Leamington Spa, England.

## Description

This invention relates to flashlamp arrays and more particularly to a process for sealing a plastic housing member of a multi-lamp photoflash unit.

Numerous multi-lamp photoflash units have been developed, manufactured and marketed and all of these units include a number of photoflash lamps and reflectors enclosed within a plastic cover. In each case, structural integrity and security of the unit is dependent upon a mechanical or chemical bonding of a base and cover.

In such units, techniques such as mechanical bonding and hot-melt adhesives and glues have been employed to seal multi-lamp photoflash units. However, such techniques do leave something to be desired especially when employed in a relatively high production operation. Other processes such as heat sealing, which is employed in the Magicube structure, or ultrasonic sealing as utilized in the Flash Bar or Flip Flash constructions, also have been and still are used with varying degrees of success.

Also, heat sealing often employs a high intensity light source which is focused on the junction to be heated. Thus, the plastic absorbs light energy and heat and is softened in an amount sufficient to weld multiple layers together. Unfortunately, high temperature lamps used for heat sealing tend to exhibit life problems, cooling problems and maintenance problems all of which are undesirable. Moreover, the plastic material must be such that it will absorb sufficient heat to soften the materials. Such requirements do tend to present problems in a high production operation.

Additionally, ultrasonic heating is dependent upon sonic energy which is transformed into friction and heat by the movement of parts in contact with one another. Thus, the materials to be bonded must be similar or have similar characteristics and a relatively low softening temperature in order to insure a good bond. Moreover, good contact and accurate mating of the parts to be bonded is necessary due to the limited amplitude of the vibrating parts. Thus, it is not uncommon to configure the ultrasonic source to match a given bond or seal design.

An object of the present invention is to provide a process for manufacturing an enhanced multi-lamp photoflash array. Another object of the invention is to provide a process for the manufacture of an improved seal for bonding a multi-lamp photoflash array.

These and other objects, advantages and capabilities are achieved by a plastic housing member sealing process for a multi-layer photoflash unit having a foldable plastic housing member with a back portion having a plurality of cavities for receiving flashlamps and a light transmitting front portion, characterized according to the invention by the steps of

positioning said back portion and front portion of said plastic housing member between a pair of head members with at least one of said head members having a knurled surface,

contacting said front and back portions of said plastic housing member with said head members, and

energizing said head members to effect a seal between said back and front portion of said plastic housing members whereby a knurled pattern providing point contacts and sealing energy concentration is provided on at least one of said back and front portions of said plastic housing member.

Fig. 1 is an exploded view of a preferred form of multi-lamp photoflash array utilizing the invention; and

Fig. 2 is an elevational view of array of Fig. 1; and

Fig. 3 is a graphic illustration of apparatus suitable to the fabrication of the array of Fig. 1.

For a better understanding of the present invention, together with other and further objects, advantages and capabilities thereof, reference is made to the following disclosure and appended claims in connection with the accompanying drawings.

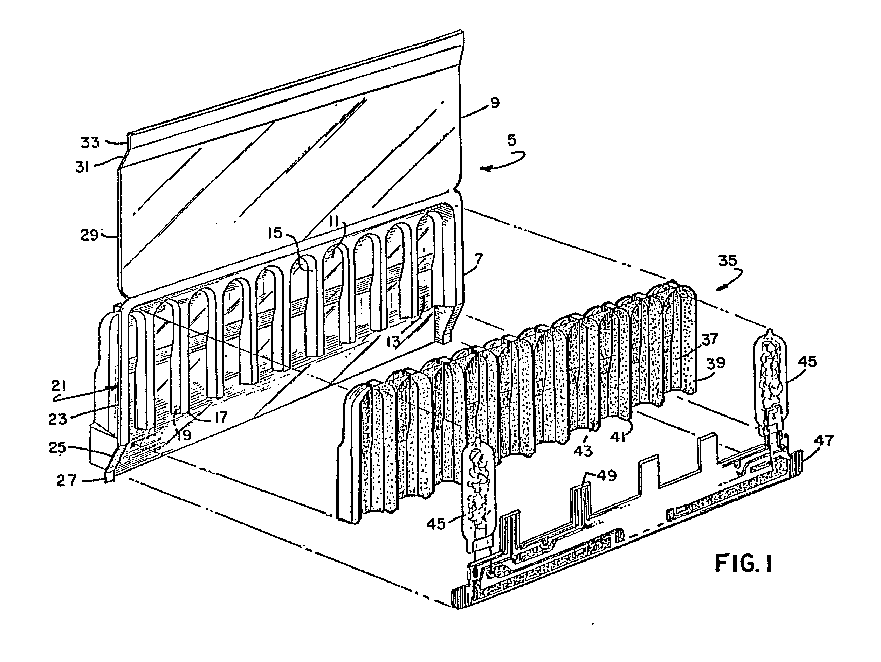

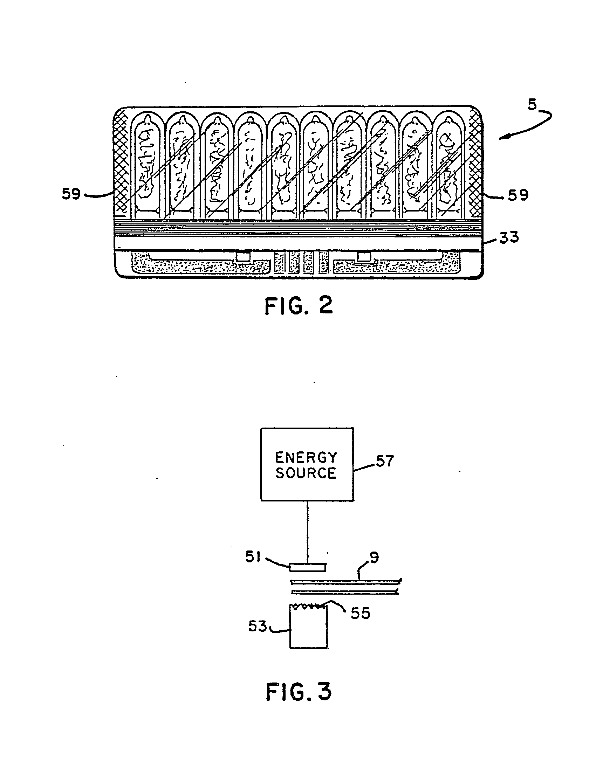

Referring to the drawings, Figs. 1 and 2 illustrate a preferred form of multi-lamp photoflash array embodying the invention. The photoflash array includes plastic housing member 5 having a back portion 7 and a front portion 9. The back portion 7 includes a multiplicity of cavities 11 each having an off-set portion 13, to be explained hereinafter, and a pair of oppositely disposed sidewalls 15 which are in a plane substantially normal the opening of the cavities 11. The cavities 11 are spaced from one another by a bridging portion 17 and an aperture 19 is located in one or more of the bridging portions 17 to provide an exhaust passage for the cavities 11. Also, an outer ridge 21 of the back portion 7 of the plastic housing member 5 substantially surrounds the cavities 11 and includes a first relatively flat portion 23 adjacent the cavity 11 at each end of the array, a tapering portion 25 and a second relatively flat portion 27 joined to the first flat portion 23 by the tapering portion 25.

The front portion 9 of the housing member 5 is of a light transmitting plastic and is formed to fold down and provide an envelope enclosing the contents of the back portion 7. This front portion 9 has an edge portion 29 connected by a tapering portion 31 to a relatively flat portion 33. Moreover, the edge portion 29, tapering portion 31 and flat portion 33 are of a configuration substantially identical to the first flat portion 23, tapering portion 25 and second flat portion 27 of the back portion 7 of the housing member 5 and are formed for bonding when the back portion 9 is folded to provide an enclosing envelope for the cavities 11.

Referring for a moment to Fig. 1, the preferred multi-lamp photoflash array also includes a reflector unit 35 having a multiplicity of spaced reflector cavities 37 formed to nest within the cavities 11 of the housing member 5. Each of these reflector cavities 37 has a surface of reflecting material 39 thereon and includes a spaced

**0 059 439**

portion 41 intermediate each pair of the reflector cavities 37. A hole 43 is provided in the spaced portion 41 and is aligned with the aperture 19 of the back portion 7 of the housing member 5.

A multiplicity of flashlamps 45 formed for deposition within the reflector cavities 37 are affixed to a printed circuit board 47. This printed circuit board 47 includes a plurality of fingers 49 extending therefrom and formed for reception by the offset portion 13 of the housing member 5. Thus, the reflector unit 35 is disposed within the cavities 11 of the back portion 9, the flashlamps 45 and fingers 49 of the printed circuit board 47 are located within the reflector cavities 37 and the package is in condition for sealing.

In the sealing process, as illustrated by the apparatus of Fig. 3, the front portion 9 of the housing member 5 is folded to contact the back portion 7. Thereupon, the edge portion 29, tapering portion 31 and flat portion 33 are aligned with and contact the first flat portion 23, tapering portion 25 and second flat portion 27 respectively.

Thereafter, one or more and preferably each one of the pairs 23—29; 25—31; and 27—33 of plastic layers are disposed intermediate a pair of head members 51 and 53. At least one and preferably both of the head members 51 and 53 have a knurled surface 55. This knurled surface 55 has a pattern wherein point contacts are created. These point contacts of the knurled surface 55 on each of the diametrically opposed head members 51 and 53 may be aligned to mesh or mis-aligned so as not to mesh depending upon the desired result.

The pair of head members 51 and 53 are coupled to an energizing source 57 such as an ultrasonic energy source for example. Thus, the head members 51 and 53 are placed in contact with the plastic layers, 23—29 for example, and energized by the source 57 whereupon a knurled seal 59 of Fig. 2 bonding the back and front portions 7 and 9 of the housing member 5 is provided. Obviously, one or all of the pairs of plastic layers 23—29, 25—31 and 27—33 may be bonded utilizing the above-mentioned process and apparatus.

Additionally, it is to be noted that the above-mentioned knurled surface technique wherein point contacts are formed in the plastic has permitted ultrasonic sealing without the necessity of providing energy directors as normally required when attempts were made to ultrasonically seal flat surfaces. As a result, the process and apparatus is simplified and costs reduced.

While there has been shown and described what is at present considered the preferred embodiment of the invention, it will be obvious to those skilled in the art that various changes and modifications may be made therein without departing from the invention as defined by the appended claims.

Thus, an enhanced multi-lamp photoflash unit has been provided wherein improved bonding of a plastic housing member is achieved. This improved bonding is dependent upon one or more knurled surfaces coupled to an energy source such as an ultrasonic energy source for example. In the illustrated example, the front and back portions of a plastic housing member are bonded by positioning of a portion thereof intermediate a pair of head members having a knurled surface. These head members are then energized to effect the desired knurled seal bonding the housing member.

As previously mentioned, employment of the knurled surface permits energization by ultrasonic energy without the necessity of energy directors. Moreover, the utilization of such knurled surfaces to provide point contacts whereby energy is concentrated is also an advantage when other energy sources are utilized. For example, a heat source is adapted to bonding of surfaces which are configured to provide point contact therebetween. Thus, a heat source and knurled surfaces provide an enhanced bond utilizing a simplified apparatus and simplified process steps as compared with prior known techniques for bonding multi-lamp photoflash arrays.

## Claims

1. A plastic housing member sealing process for a multi-lamp photoflash unit having a foldable plastic housing member (5) with a back portion (7) having a plurality of cavities (11) for receiving flashlamps and a light transmitting front portion (9) characterized by the steps of

positioning said back portion (7) and front portion (9) of said plastic housing member (5) between a pair of head members (51, 53) with at least one of said head members having a knurled surface (55),

contacting said front and back portions (7, 9) of said plastic housing member (5) with said head members (51, 53), and

energizing said head members (51, 53) to effect a seal between said back and front portion (7, 9) of said plastic housing members (5), whereby a knurled pattern providing point contacts and sealing energy concentration is provided on at least one of said back and front portions (7, 9) of said plastic housing member (5).

2. The process of claim 1, characterized by the step of providing a knurled surface (55) on both of said head members (51, 53) whereby enhanced sealing of said plastic back and front portions (7, 9) is effected.

3. The process of claim 1, characterized by the step of aligning said knurled surfaces (55) to effect meshing of one surface with the other.

4. The process of claim 1, characterized by the step of aligning said knurled surfaces (55) to insure non-meshing of one knurled surface with the other.

5. The process of claim 1, characterized by the step of applying sonic energy to said back and front portions (7, 9).

6. The process of claim 1, characterized by the step of applying heat energy to said back and front portions (7, 9).

## Patentansprüche

1. Verfahren zur Versiegelung eines Gehäuseelements aus Kunststoff für eine Vielfach-Photoblitzeinheit mit einem faltbaren Gehäuseelement (5) aus Kunststoff, mit einem Rückenteil (7), das eine Mehrzahl von Eintiefungen (11) für die Aufnahme von Blitzlampen aufweist, und mit einem lichtdurchlässigen Vorderteil (9), dadurch gekennzeichnet,

daß das Rückenteil (7) und das Vorderteil (9) des Gehäuseelements (5) aus Kunststoff zwischen einem Paar Kopfelemente (51, 53) positioniert werden, von denen zumindest das eine Kopfelement eine strukturierte Oberfläche (55) aufweist,

daß die Vorder- und Rückenteile (7, 9) des Gehäuseelements (5) aus Kunststoff mit den Kopfelementen (51, 53) in Kontakt gebracht werden, und

daß schließlich den Kopfelementen (51, 53) Energie zugeführt wird, um eine Siegelung zwischen den Rücken- und Vorderteilen (7, 9) der Gehäuseelemente (5) aus Kunststoff herbeizuführen, wobei ein strukturiertes Muster mit Punktberührungen und Konzentration von Siegelungsenergie bezüglich zumindest eines der Rücken- und Vorderteile (7, 9) des genannten Gehäuseelements (5) aus Kunststoff gewährleistet ist.

2. Verfahren nach Anspruch 1, dadurch gekennzeichnet, daß an beiden der Kopfelemente (51, 53) eine strukturierte Oberfläche (55) vorgesehen ist, wodurch ein verbessertes Verschweißen der Rücken- und Vorderteile (7, 9) aus Kunststoff bewirkt wird.

3. Verfahren nach Anspruch 1, dadurch gekennzeichnet, daß die strukturierten Oberflächen (55) derart ausgerichtet sind, daß die eine Oberfläche in die andere eingreift.

4. Verfahren nach Anspruch 1, dadurch gekennzeichnet, daß die strukturierten Oberflächen (55) derart ausgerichtet sind, daß die beiden Oberflächen nicht ineinander eingreifen.

5. Verfahren nach Anspruch 1, dadurch gekennzeichnet, daß Schallenergie auf die Rücken- und Vorderteile (7, 9) aufgebracht wird.

6. Verfahren nach Anspruch 1, dadurch gekennzeichnet, daß Wärmeenergie auf die Rücken- und Vorderteile (7, 9) aufgebracht wird.

## Revendications

1. Un procédé pour fermer la boîte d'un dispositif à multiples lampes-éclairs comportant un élément de boîtier en matière plastique pliable (5), avec une partie arrière (7) présentant plusieurs logements (11) pour recevoir les lampes-éclairs et une partie avant (9) laissant passer la lumière, consistant essentiellement à:

— mettre en place ladite partie arrière (7) et ladite partie avant (9) dudit élément de boîtier en matière plastique (5) entre une paire de têtes de contact (51, 53), au moins l'une desdites têtes ayant une surface moletée (55),

— mettre en contact lesdits éléments avant (9) et arrière (7) dudit élément de boîtier en matière plastique avec lesdites têtes de contact (51, 53) et

— exciter lesdites têtes de contact (51, 53) pour réaliser un joint entre lesdits éléments avant et arrière (7, 9) dudit élément de boîtier en matière plastique (5) de telle sorte qu'une surface moletée définissant des contacts par points et assurant l'étanchéité de la concentration d'énergie soit ménagée sur l'un au moins desdits éléments avant et arrière (7, 9) dudit élément de boîtier en matière plastique (5).

2. Un procédé selon la revendication 1, caractérisé en ce qu'on ménage une surface moletée (55) sur les deux têtes de contact (51, 52), de manière à obtenir une fermeture étanche améliorée desdits éléments avant et arrière (7, 9).

3. Un procédé selon la revendication 1, caractérisé en ce que l'on aligne lesdites surfaces moletées (55) de manière à assurer la prise de l'une des surfaces avec l'autre surface.

4. Un procédé selon la revendication 1, caractérisé en ce que l'on prévoit l'alignement desdites surfaces moletées (55) pour assurer le dégagement de l'une des surfaces moletées, de l'autre surface.

5. Un procédé selon la revendication 1, caractérisé en ce que l'on applique une énergie sonique auxdits éléments avant et arrière (7, 9).

6. Un procédé selon la revendication 1, caractérisé en ce que l'on aplique une énergie thermique auxdits éléments avant et arrière (7, 9).

FIG. 1

0 059 439

0 059 439

FIG. 2

ENERGY
SOURCE
57

51
9
55
53

FIG. 3

2